# EUROPEAN PATENT APPLICATION

(11) **EP 4 197 809 A1**
(43) Date of publication of application: **21.06.2023**
(21) Application number: 22212409.1
(22) Date of filing: 09.12.2022
(51) Int. Cl.: B60C 7/14, B60B 9/26

(54) **NON-PNEUMATIC TIRE OR WHEEL WITH METAL SUPPORT STRUCTURE**

(30) Priority: 17.12.2021 US 202117644872
(71) Applicant: The Goodyear Tire & Rubber Company, Akron, OH 44316 (US)
(72) Inventor: HINQUE, Daniel Paul Luc Marie, B-6720 Habay-la-Neuve (BE)
(74) Representative: Kutsch, Bernd

(57) **Abstract**

A non-pneumatic tire is disclosed having a tire axis and a first lateral side and a second lateral side. The non-pneumatic tire (100, 200) comprises an outer ring structure (102, 202) with a tread (112, 212) extending circumferentially around the tire axis, the outer ring structure (102, 202) extending transversally from the first lateral side to the second lateral side and comprising a first support ring (104a, 204a) on the first lateral side and a second support ring (104b, 204b) on the second lateral side; an inner ring structure, the inner ring structure comprising a first base ring (110a, 210a) on the first lateral side and a second base ring (110b, 210b) on the second lateral side; and a connecting structure effective to transfer load from the inner ring structure to the outer ring structure, the connecting structure including: a first set of metal spokes (114, 214) extending from the first support ring (104a, 204a) to one of the first and second base rings; and a second set of metal spokes (114, 214) extending from the second support ring (104b, 204b) to the other of the first and second base rings; wherein the metal spokes (114, 214) of the first and second sets are slanted with respect to the tire axis.

## Description

### Background of the Invention

The present invention relates generally to a vehicle tire and, more particularly, to a non-pneumatic tire with support rings and metal spokes. In a further aspect, the invention relates to a wheel comprising a non-pneumatic tire with support rings and metal spokes.

The pneumatic tire has been the solution of choice for vehicular mobility for over a century and is still dominant on the tire market today. Pneumatic tires are efficient at carrying loads because all of their structure participates in carrying the load. Pneumatic tires are also desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed fluid (e.g., air or an inert gas). A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a desirous improvement.

Non pneumatic tires are typically defined by their load carrying efficiency. So-called "bottom loaders" are essentially rigid structures that carry a majority of the load in the portion of the structure below the hub. "Top loaders" are designed so that all of the structure participates in carrying the load. Top loaders thus have a higher load carrying efficiency than bottom loaders, allowing a design that has less mass.

US 2017/297371 A1 discloses a non-pneumatic tire, which includes a ground contacting annular tread portion, a shear band, and a connecting web positioned between a hub and the shear band. US 2017/297371 A1 specifically relates to the shear band, which is preferably comprised of a three-dimensional spacer fabric having a first and second layer connected by connecting members. The three-dimensional spacer fabric has a defined depth. The three-dimensional spacer structure further includes a plurality of cells formed between the connecting members, and wherein one or more of the cells are filled with a filler material. The filler material may be foam or a thermoplastic elastomer.

US 8,662,122 discloses a non-pneumatic tire including a plurality of springs. Each spring comprises a first end portion, a second end portion, and an arching middle portion. Each spring is interwoven with at least one other spring thereby forming a toroidal structure extending about an entire circumference of the non-pneumatic tire. The toroidal structure is at least partially coated with an elastomer.

US 2009/0250149 relates to a flexible non-pneumatic tire, comprising a plurality of supporting elements interconnected by an interconnection structure, the interconnection structure supporting a tread, each supporting element being connected by a staple to a rim.

US 6,640,859 describes a non-pneumatic resilient tire which derives its capacity to bear a load from laminated elements capable of supporting bending moments. The laminated elements include a stack of resilient sheets superposed and separated by a layer of rubber adhering to the latter, forming a beam capable of undergoing bending stress.

### Summary of the Invention

The invention relates to a non-pneumatic tire in accordance with claim 1 and to a vehicle wheel in accordance with claim 11.

Dependent claims refer to preferred embodiments of the invention.

A first aspect of the invention relates to a non-pneumatic tire. The non-pneumatic tire has a tire axis, a first lateral side and a second lateral side. The first and second lateral sides are axially separated. The non-pneumatic tire comprises: an outer ring structure with a tread extending circumferentially around the tire axis, the outer ring structure extending transversally from the first lateral side to the second lateral side and comprising a first support ring on the first lateral side and a second support ring on the second lateral side; an inner ring structure, the inner ring structure comprising a first base ring on the first lateral side and a second base ring on the second lateral side; and a connecting structure effective to transfer load from the inner ring structure to the outer ring structure, the connecting structure including:
a first set of metal spokes extending from the first support ring to one of the first and second base rings, and a second set of metal spokes extending from the second support ring to the other of the first and second base rings, the spokes of the first and second sets being slanted with respect to the tire axis.

As used herein, the term "tire" designates a ring-shaped component configured to surround a (wheel) rim to transfer load from the rim to the ground and to provide a flexible cushion that absorbs part of the shocks occurring when the tire rolls on the ground. The term "wheel" herein designates the combination of a tire and a rim. The term "rim" designates a comparatively rigid circular component with which a wheel can be connected to a wheel axle.

A second aspect of the invention relates to a vehicle wheel, the wheel having a wheel axis, a first lateral side and a second lateral side, the wheel comprising: a rim arranged on the wheel axis; an outer ring structure with a tread extending circumferentially around the wheel axis, the outer ring structure extending transversally from the first lateral side to the second lateral side and comprising a first support ring on the first lateral side and a second support ring on the second lateral side; an inner ring structure, the inner ring structure comprising a first base ring connected to the rim on the first lateral side and a second base ring connected to the rim on the second lateral side; a connecting structure effective to transfer load from the inner ring structure to the outer ring structure, the connecting structure including: a first set of metal spokes extending from the first support ring to one of the first and second base rings, and a second set of metal spokes extending from the second support ring to the other of the first and second base rings, the spokes of the first and second sets being slanted with respect to the wheel axis.

A wheel according to the second aspect of the invention could be formed by mounting a non-pneumatic tire according to the first aspect of the invention on a (wheel) rim. Alternatively, the inner ring structure with the first and second base rings could be integrated with the rim.

In embodiments of the aspects of the invention, the spokes of the first set may extend from the first support ring to the second base ring while the spokes of the second set extend from the second support ring to the first base ring. The spokes of the first and second sets may be arranged in a scissor configuration. The spokes of the first and second sets may cross each other in a plane that is perpendicular to the tire or wheel axis and located centrally (at least approximately at mid-distance) between the support rings or the base rings. The individual spokes may be substantially linear features. The spokes may cross each other without being in contact.

In alternative embodiments, the spokes of the first set may extend from the first support ring to the first base ring while the spokes of the second set extend from the second support ring to the second base ring. In such configuration, the support rings may have between them a different spacing distance than the base rings, in order to ascertain that the spokes extend at a slant angle (not perpendicularly) with respect to the tire or wheel axis.

In preferred embodiments, the spokes of the first set may alternate with the spokes of the second set in circumferential direction around the tire or wheel axis.

In preferred embodiments, the outer ring structure may comprise leaf springs extending from the first support ring to the second support ring, the leaf springs being arranged to maintain the first and second support rings in substantially facing and substantially coaxial relationship. According to specific embodiments, the leaf springs may have a radially outer side forming the tread. The leaf springs may be configured to deform under load so as to form a contact patch. The leaf springs may be dimensioned such that the contact patch extends over a predefined number of leaf springs under a given nominal load.

According to preferred embodiments, the outer ring structure may comprise a support band extending from the first support ring to the second support ring, the support band being configured to maintain the first and second support rings in substantially facing and substantially coaxial relationship. The support band may have a radially outer surface on which the tread is formed as a tread band. The support band optionally comprises transversal reinforcement extending from the first support ring to the second support ring. The support band may include therein one or more cushions. The one or more cushions may be arranged between the transversal reinforcement and the tread band. The cushions may have a function of distributing forces exerted on the tread over a larger area and a function of yielding under pressure so as to contribute to formation of a contact patch between the tread and the ground.

According to preferred embodiments, one or more braces may be provided for maintaining the first and second base rings in facing relationship at a distance from each other. The one or more braces may be effective to preload the spokes. When a rim is provided, the one or more braces may connect the first and second base rings to the rim.

According to preferred embodiments, the first and second support rings may have a support ring diameter, the first and second base rings may have a base ring diameter, and the ratio of the base ring diameter to the support ring diameter may amounts to between 0.2 and 0.9, preferably to between 0.3 and 0.8, and more preferably to between 0.5 and 0.75.

According to preferred embodiments, the rim comprises a first flange arranged on the first lateral side and a second flange arranged on the second lateral side, at least one of the first and second flanges being removable, the first and second flange comprising an abutment surface for the first and second base ring, respectively. One or more braces or one or more clamps could be provided to push the first and second base ring against the abutment surface of the first and second flange, respectively.

As used herein, the expression "tread" may designate the part of a tire or wheel that is intended for touching the ground.

The spokes may be made of any suitable metal, e.g., steel, copper, aluminum, magnesium, etc. As used herein, the expression metal is intended to encompass alloys of plural elemental metals. The use of the expression "metal spokes" does not exclude the presence of non-metal components thereon, such as, e.g., coating or wrapping.

In the present document, the verb "to comprise" and the expression "to be comprised of" are used as open transitional phrases meaning "to include" or "to consist at least of". Unless otherwise implied by context, the use of singular word form is intended to encompass the plural, except when the cardinal number "one" is used: "one" herein means "exactly one". Ordinal numbers ("first", "second", etc.) are used herein to differentiate between different instances of a generic object; no particular order, importance or hierarchy is intended to be implied by the use of these expressions. Furthermore, when plural instances of an object are referred to by ordinal numbers, this does not necessarily mean that no other instances of that object are present (unless this follows clearly from context). When reference is made to "an embodiment", "one embodiment", "embodiments", etc., this means that these embodiments may be combined with one another. Furthermore, the features of those embodiments can be used in the combination explicitly presented but also that the features can be combined across embodiments without departing from the invention, unless it follows from context that features cannot be combined.

### Brief Description of the Drawings

By way of example, preferred, non-limiting embodiments of the invention will now be described in detail with reference to the accompanying drawings, in which:
FIG. 1 is a perspective view of all-metal non-pneumatic tire according to a first embodiment;
FIG. 2 is a side elevation view of the tire of FIG. 1;
FIG. 3 is a partial radial cross-sectional view of the tire of FIG. 1;
FIG. 4 is a side elevation view of a wheel comprising the tire of FIG. 1 mounted on a rim;
FIG. 5 is a partial radial cross-sectional view of the wheel of FIG. 4;
FIG. 6 is a perspective view of non-pneumatic tire according to a second embodiment;
FIG. 7 is a side elevation view of the tire of FIG. 6; and
FIG. 8 is a partial radial cross-sectional view of the tire of FIG. 6.

### Detailed Description of Preferred Embodiments of the Invention

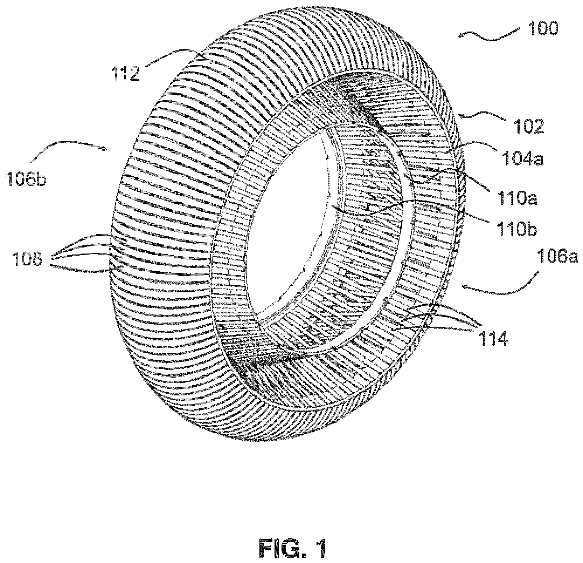

Figs. 1 to 3 show a non-pneumatic tire 100 according to an embodiment. The non-pneumatic tire 100 comprises an outer ring structure 102 with a first support ring 104a on the first lateral side 106a of the tire 100 and a second support ring 104b on the second lateral side 106b of the tire. The first and second support rings 104a, 104b extend circumferentially around the tire axis, one at an axial distance from the other. The outer ring structure 102 further comprises a bridge structure extending in the transversal direction of the tire 100 that connects the first support ring 104a with the second support ring 104b. The present specification uses the expression "transversal direction" synonymous with "axial direction". The bridge structure maintains the first and second support rings 104a, 104b in substantially coaxial, parallel positions. In the embodiment of Figs. 1 to 3, the bridge structure comprises a series of arc-shaped leaf springs 108 spanning from the first support ring 104a to the second support ring 104b. The radially outer surface of the leaf springs 108 forms a tread 112 extending circumferentially around the tire axis.

The non-pneumatic tire 100 further comprises an inner ring structure including a first base ring 110a on the first lateral side106a and a second base ring 110b on the second lateral side 106b. The first and second base rings 110a, 110b are connected to the outer ring structure by a connecting structure comprising metal spokes 114. The metal spokes 114 are divided in two sets: a first set comprising the metal spokes that extend from the first support ring 104a to the second base ring 110b, and a second set comprising the metal spokes that extend from the second support ring 104b to the first base ring 110a.

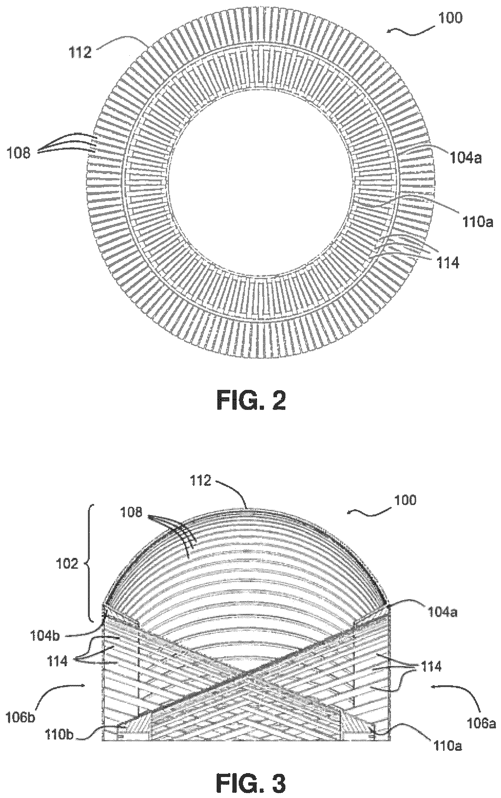

As can be seen in Figs. 1 and 3, the spokes of the first and second sets extend generally linearly and are slanted with respect to the tire axis. The spokes are arranged in a scissor configuration. The spokes of the first and second sets cross each other in a plane perpendicular to the tire axis located centrally between the support rings and the base rings, respectively. Each spoke extends substantially along a radial plane (i.e., a plane that contains the tire axis). In circumferential direction around the tire axis, the spokes of the first set alternate with the spokes of the second set.

The tire of Figs. 1 to 3 may be may entirely from metal, e.g., steel. It shall be noted that different metals or different grades or alloys of the same metals may be used for the different tire components. In embodiments, spring grade steel may be the preferred material for the leaf springs, the support rings, and the spokes (strengths from 600 MPa to more than 2000 MPa). The illustrated tire comprises 144 leaf springs, two support rings, 144 spokes and two base rings. Off course, the number of leaf springs, the number of spokes can vary. The number of leaf springs need not be equal to the number of spokes. The components may be welded or otherwise bonded together, e.g., fastened with screws, rivets, etc.

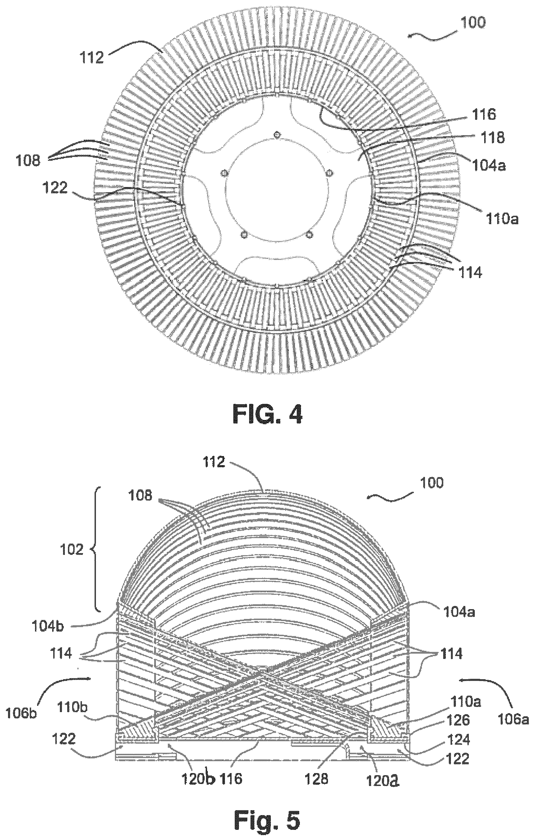

Figs. 4 and 5 show the tire of Figs. 1 to 3 mounted on a rim 118. The rim 118 comprises a circular cylindrical rim lip 116 for supporting the inner ring structure of the tire 100, in particular the first and second base rings 110a, 11 0b. The rim lip 116 has first and second series of openings 120a, 120b therein. The first series of openings 120a is arranged circumferentially along the axial edge on the first lateral side 106a. The second series of openings 120b is arranged circumferentially along the axial edge on the second lateral side 106b. The openings 120a are arranged at a first distance from the axial edge on the first lateral side 106a that corresponds approximately to the axial thickness of the first base ring 110a. Likewise, the openings 120b are arranged at a second distance from the axial edge on the second lateral side 106b that corresponds approximately to the axial thickness of the second base ring 110b. The first and second distances may be equal, like in the illustrated embodiment, or different.

The first and second base rings 110a, 110b are fixed on the rim lip 116 with braces 122. In the illustrated embodiment, the braces 122 are essentially C-shaped. The braces 122 are comprised of a web 124, an axially outward clasp arm 126 and an axially inner clasp arm 128. The axially outward clasp arm 126 is configured to engage the axially outer edge of the rim lip 116. The length of the web 124 is a little greater than the first or the second distance, respectively. The axially inner clasp arm 128 is configured to protrude through the opening 120a or 120b and to engage with the first or the second base ring 110a or 110b, respectively. The axially inner surfaces of the first and second base rings 110a, 110b and the axially outer surfaces of the axially inner clasp arms 128 are shaped complementarily such that the engagement between the axially inner clasp arms 128 and the first and second base rings 110a, 110b is achieved by positive locking. In the illustrated embodiment, the axially inner clasp arm 128 comprises a stud-like protrusion on the axially outward side while the first and second base rings 110a, 110b have corresponding recesses on their axially inner surfaces. However, other shapes may be used to achieve the engagement between the axially inner clasp arms 128 and the first and second base rings 110a, 110b by positive locking. Furthermore, alternative fixations of the first and second base rings 110a, 110b on the rim lip 116, such as, e.g., bolting, riveting, clamping, etc. may be used.

Before the braces 122 can be put into place, the first and second base rings 110a, 110b need be moved axially outward from a rest position (see Fig. 3) into a preloaded position (see Fig. 5) closer to the edges of the rim lip 116. Each brace 122 is then put into place by bringing it from the radially inner side of the rim lip 116 into engagement with the axially outer edge of the rim lip. The brace 122 is then rotated so that the axially inner clasp arm 128 traverses the opening 120a or 120b and engages with the first or second base ring 110a, 110b. The braces hold the first and second base rings 110a, 110b in their axially outward, preloaded positions.

By pulling or pushing the first and second base rings 110a, 110b to the axially more outward positions, the non-pneumatic tire 100 is preloaded as a whole: moving the first and second base rings 110a, 110b axially outward draws the first and second support rings 104a, 104b to axially and radially more inward positions. The deformation of the tire depends on several parameters, in particular the spring stiffness of the leaf springs 108.

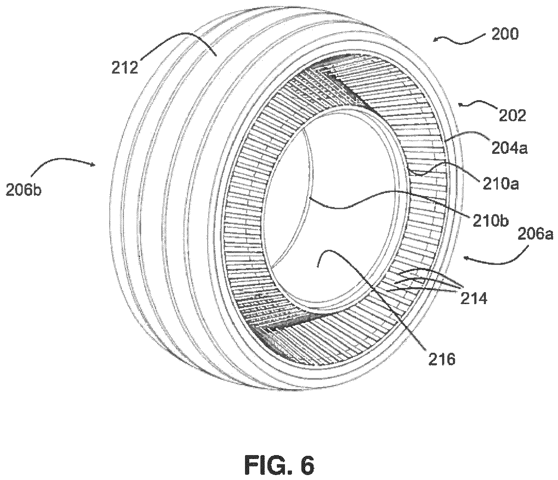

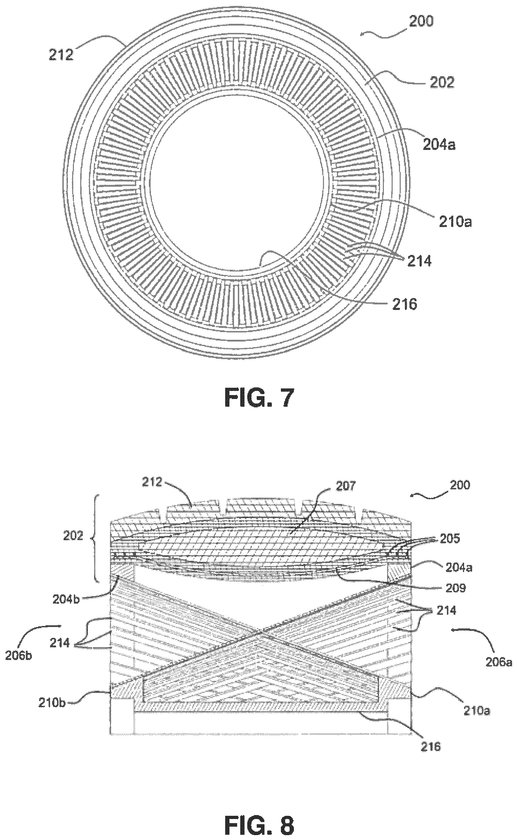

Figs. 6 to 8 show a non-pneumatic tire 200 according to a further embodiment. The non-pneumatic tire 200 comprises an outer ring structure 202 with a first support ring 204a on the first lateral side 206a of the tire 200 and a second support ring 204b on the second lateral side 206b of the tire. The first and second support rings 204a, 204b extend circumferentially around the tire axis, one at an axial distance from the other. The outer ring structure 202 further comprises a bridge structure in the form of a support band extending in the transversal direction of the tire 200 that connects the first support ring 204a with the second support ring 204b. The support band maintains the first and second support rings 204a, 204b in substantially coaxial, parallel positions.

The support band has a radially outer surface on which the tread is formed as a tread band 212. The support band includes transversal reinforcement 209 extending from the first support ring 204a to the second support ring 204b. The support band further includes one or more cushions 207 arranged between the transversal reinforcement 209 and the tread band 212. The cushions 207 distribute forces locally exerted on the tread 212 over a larger area and yield under pressure so as to contribute to formation of a contact patch between the tread 212 and the ground. The support band further includes longitudinal reinforcement 205. The reinforcement may be made of steel cords and/or cords formed from nylon fiber, polyester fiber, fiber glass, carbon fiber, aramid fiber, glass fiber, polyethylene fiber, polyethylene terephthalate fiber, or other reinforcement materials. Different reinforcement materials could be combined. It is worthwhile noting that a "cord" may include one or plural strands.

The non-pneumatic tire 200 further comprises an inner ring structure including a first base ring 210a on the first lateral side 206a and a second base ring 210b on the second lateral side 206b. The first and second base rings 210a, 210b are connected to the outer ring structure by a connecting structure comprising metal spokes 214. The metal spokes 214 are divided in two sets: a first set comprising the metal spokes that extend from the first support ring 204a to the second base ring 210b, and a second set comprising the metal spokes that extend from the second support ring 204b to the first base ring 210a.

The spokes 214 of the first and second sets are slanted with respect to the tire axis. The spokes 214 are arranged in a scissor configuration and cross each other in a plane perpendicular to the tire axis located centrally between the support rings 204a, 204b and the base rings 210a, 210b, respectively. In circumferential direction around the tire axis, the spokes of the first set alternate with the spokes of the second set.

The first and second base rings 210a, 210b form the axial edges of a rim lip 216. The spokes 214 are thus directly attached to the rim lip 216. The rim lip 216 maintains the first and second base rings 210a, 210b at a distance from each other, such that the spokes 214 are pretensioned (or not) as desired.

## Claims

1. A non-pneumatic tire having a tire axis, a first lateral side and a second lateral side, the non-pneumatic tire (100, 200) comprising:
an outer ring structure (102, 202) with a tread (112, 212) extending circumferentially around the tire axis, the outer ring structure (102, 202) extending transversally from the first lateral side to the second lateral side and comprising a first support ring (104a, 204a) on the first lateral side and a second support ring (104b, 204b) on the second lateral side;
an inner ring structure, the inner ring structure comprising a first base ring (110a, 210a) on the first lateral side and a second base ring (110b, 210b) on the second lateral side; and
a connecting structure effective to transfer load from the inner ring structure to the outer ring structure, the connecting structure including:
a first set of metal spokes (114, 214) extending from the first support ring (104a, 204a) to one of the first and second base rings; and
a second set of metal spokes (114, 214) extending from the second support ring (104b, 204b) to the other of the first and second base rings;
wherein the metal spokes (114, 214) of the first and second sets are slanted with respect to the tire axis.

2. The non-pneumatic tire of claim 1, wherein the metal spokes (114, 214) of the first set extend from the first support ring (104a, 204a) to the second base ring (110b, 210b) and wherein the metal spokes (114, 214) of the second set extend from the second support ring (104b, 204b) to the first base ring (110a, 210a), and, optionally, wherein the metal spokes (114, 214) of the first and second sets are arranged in a scissor configuration.

3. The non-pneumatic tire of claim 1 or 2, wherein the metal spokes (114, 214) of the first set alternate with the metal spokes (114, 214) of the second set in circumferential direction around the tire axis.

4. The non-pneumatic tire of at least one of the previous claims, wherein the outer ring structure (102, 202) comprises leaf springs (108) extending from the first support ring (104a, 204a) to the second support ring (104b, 204b), the leaf springs (108) being arranged to maintain the first and second support rings in substantially facing relationship, and, optionally, wherein the leaf springs (108) have a radially outer side forming the tread (112).

5. The non-pneumatic tire of at least one of the previous claims, wherein the outer ring structure (102, 202) comprises a support band extending from the first support ring (104a, 204a) to the second support ring (104b, 204b), the support band being configured to maintain the first and second support rings in substantially facing relationship.

6. The non-pneumatic tire of claim 5, wherein the support band has a radially outer surface on which the tread (112, 212) is formed as a tread band.

7. The non-pneumatic tire of claim 5 or 6, wherein the support band comprises transversal reinforcement (209) extending from the first support ring (104a, 204a) to the second support ring (104b, 204b) and/or wherein the support band includes therein one or more cushions (207).

8. The non-pneumatic tire of at least one of the claims 5 to 7, wherein the support band has a radially outer surface on which the tread (112, 212) is formed as a tread band, wherein the support band comprises transversal reinforcement (209) extending from the first support ring (104a, 204a) to the second support ring (104b, 204b), and wherein the support band includes therein one or more cushions (207) arranged between the transversal reinforcement (209) and the tread band.

9. The non-pneumatic tire of at least one of the previous claims, comprising one or more braces (122) for maintaining the first and second base rings in facing relationship at a distance from each other, and, optionally, wherein the one or more braces (122) are effective to preload the metal spokes (114, 214).

10. The non-pneumatic tire of at least one of the previous claims, wherein the first and second support rings have a support ring diameter, wherein the first and second base rings (104a, 104b, 204a, 204b) have a base ring diameter, and wherein a ratio of the base ring diameter to the support ring diameter amounts to from 0.2 to 0.9 or from 0.5 to 0.75.

11. A vehicle wheel, the wheel having a wheel axis, a first lateral side and a second lateral side, the wheel comprising:
a rim (118) arranged on the wheel axis;
an outer ring structure (102, 202) with a tread (112, 212) extending circumferentially around the wheel axis, the outer ring structure (102, 202) extending transversally from the first lateral side to the second lateral side and comprising a first support ring (104a, 204a) on the first lateral side and a second support ring (104b, 204b) on the second lateral side;
an inner ring structure , the inner ring structure comprising a first base ring (110a, 210a) connected to the rim (118) on the first lateral side and a second base ring(110b, 210b) connected to the rim (118) on the second lateral side;
a connecting structure effective to transfer load from the inner ring structure to the outer ring structure (102, 202), the connecting structure including:
a first set of metal spokes (114, 214) extending from the first support ring (104a, 204a) to one of the first and second base rings; and
a second set of metal spokes (114, 214) extending from the second support ring (104b, 204b) to the other of the first and second base rings;
wherein the metal spokes (114, 214) of the first and second sets are slanted with respect to the wheel axis.

12. The vehicle wheel of claim 11, wherein the metal spokes (114, 214) of the first set extend from the first support ring (104a, 204a) to the second base ring (110b, 210b) and wherein the metal spokes (114, 214) of the second set extend from the second support ring (104b, 204b) to the first base ring (110a, 210a).

13. The vehicle wheel of claim 11 and 12, wherein the metal spokes (114, 214) of the first and second sets are arranged in a scissor configuration.

14. The vehicle wheel of at least one of the previous claims 11 to 13, wherein the metal spokes (114, 214) of the first set alternate with the metal spokes (114, 214) of the second set in circumferential direction around the tire axis.

15. The vehicle wheel of at least one of the previous claims 11 to 14, wherein the outer ring structure (102, 202) comprises leaf springs (108) extending from the first support ring (104a, 204a) to the second support ring (104b, 204b), the leaf springs (108) being arranged to maintain the first and second support rings in substantially facing relationship.
